# DEMANDE DE BREVET EUROPEEN

(11) **EP 4 386 064 A1**
(43) Date de publication de la demande: **19.06.2024**
(21) Numéro de dépôt: 23216040.8
(22) Date de dépôt: 12.12.2023
(51) Int. Cl.: C09K 11/02, C08J 3/20, C08K 3/04, C08K 5/17, C08L 63/00, C09K 11/65

(54) **MATERIAU COMPOSITE LUMINESCENT**

(30) Priorité: 14.12.2022 FR 2213364
(71) Demandeur: NOVACIUM, 69360 Solaize (FR)
(72) Inventeur: KRAIEM, Jed, 69008 LYON (FR); NICHIPORUK, Oleksiy, 69780 MIONS (FR); DEGOULANGE, Julien, 69230 SAINT GENIS LAVAL (FR)
(74) Mandataire: Be IP

(57) **Abrégé**

La présente invention concerne un procédé de fabrication d'un matériau composite luminescent, caractérisé en ce qu'il comprend les étapes consistant à :
- mélanger (100) :
• un polymère,
• un surfactant choisi parmi la famille des éthanolamines,
• des particules semi-conductrices de carbone - notamment non dopées - dont les dimensions sont comprises entre 1 et 200 nanomètres, préférentiellement entre 1 et 20 nanomètres, et
• un durcisseur,

- laisser durcir (200) le mélange obtenu pour former le matériau composite luminescent.

## Description

### DOMAINE DE L'INVENTION

La présente invention concerne le domaine technique général des composés chimiques présentant des propriétés de luminescence et de leurs procédés de fabrication associés.

De tels composés peuvent notamment être utilisés dans des applications d'augmentation de performance de modules photovoltaïques (« down-conversion ») ;

Bien entendu, de tels composés peuvent également être utilisés pour des applications dans d'autres domaines techniques tels que :
- domaine biomédical (imagerie, traitement ciblé des cellules, etc) ;
- fabrication de luminophores pour les diodes LED infrarouge ;
- marquage d'un produit authentique de façon à pouvoir le tracer et l'identifier, etc.

### ARRIERE PLAN DE L'INVENTION

La luminescence correspond à l'émission de lumière de manière rapide (fluorescence) ou plus lente (phosphorescence) suite à l'absorption de photons par une particule luminescente ayant été préalablement excitée.

Les particules luminescentes peuvent être incorporées au sein d'un module photovoltaïque pour augmenter ses performances par l'intermédiaire d'une *« réémission »* de photons ultraviolets (longueur d'onde compris entre 290 et 400 nm) dans le domaine infrarouge, ou la réponse spectrale d'une cellule photovoltaïque est maximale.

Par exemple, le document WO 2011/038335 décrit un dispositif de conversion d'une énergie lumineuse en énergie électrique. Ce dispositif comprend des particules luminescentes qui, en cas d'excitation par un rayonnement lumineux émis à une première gamme de longueurs d'onde par une source lumineuse, émettent un rayonnement lumineux à une deuxième gamme de longueurs d'ondes supérieure à la première gamme. Ceci permet de décaler la gamme de longueurs d'onde de la lumière dans une plage où la réponse spectrale de la cellule photovoltaïque est maximale afin de maximiser le rendement de conversion. Dans ce document les auteurs proposent d'utiliser des particules de morphologie complexe à base de points quantiques et/ou de terres rares, et incluant une coque en matériau semiconducteur partiellement recouverte par un métal pour améliorer les propriétés luminescentes des particules.

Les paramètres à surveiller pour l'intégration de particules luminescentes dans une matrice transparente sont :
- le rendement de luminescence, qui doit être élevé ;
- la stabilité dans le temps de l'ensemble composé des particules luminescentes et de la matrice transparente, qui doit être important puisque la durée de vie d'un panneau photovoltaïque est supérieure à 25 ans ;
- la facilité de mise en oeuvre ; et
- le cout de production qui doit être le plus faible possible.

Par exemple, le document WO 2007/050984 divulgue des nanoparticules de carbone luminescentes, dont les propriétés de photo luminescence sont obtenues par greffage d'un agent de passivation à la surface des nanoparticules de carbone. Toutefois, un inconvénient de la préparation de ces nanoparticules luminescentes est qu'il fait intervenir une étape de greffage du coeur de chaque nanoparticule de carbone, avec un composé lui conférant des propriétés de luminescence. Une telle étape peut être complexe à mettre en oeuvre.

Le document EP 2 788 450 décrit un dispositif photovoltaïque avec le matériau encapsulant (à base de chromophores et d'une matrice transparente) ayant des propriétés luminescentes pour réaliser une transformation du spectre solaire. Cependant la compatibilité chimique entre le matériau encapsulant (typiquement éthylène-acétate de vinyle), les résidus de sa polymérisation (acide acétique) et les chromophores proposés ainsi que la stabilité à long terme n'ont pas été étudiées.

Un but de la présente invention est de proposer un matériau composite luminescent et un procédé de fabrication associé permettant de remédier à au moins l'un des inconvénients précités.

Notamment, un but de la présente invention est de proposer un matériau composite luminescent :
- ayant un rendement de luminescence amélioré, et/ou
- pouvant être excité à partir de rayonnements lumineux d'excitation émis dans une large gamme de longueur d'onde du spectre ultraviolet, et/ou
- apte à émettre un rayonnement lumineux dans une gamme de longueur d'onde allant du spectre visible jusqu'au proche infra-rouge (c'est-à-dire comprise entre 400 et 850 nm), et/ou
- dont la quantité de photons émis (en réponse à une excitation lumineuse dans le domaine du spectre des ultraviolets) à des longueurs d'onde dans le proche infra-rouge augmente avec la température, et/ou
- dont la stabilité dans le temps et la compatibilité chimique sont améliorées.

Un autre but de la présente invention est de proposer un procédé de fabrication d'un tel matériau composite luminescent plus simple à mettre en oeuvre que les procédés de fabrication existants.

### BREVE DESCRIPTION DE L'INVENTION

A cet effet, l'invention propose un procédé de fabrication d'un matériau composite luminescent, ***remarquable en ce qu'***il comprend les étapes consistant à
- mélanger un polymère, un surfactant choisi parmi la famille des alcools aminés, notamment des éthanolamines, des particules semi-conductrices de carbone - notamment non dopées - dont les dimensions sont comprises entre 1 et 200 nanomètres, préférentiellement entre 1 et 20 nanomètres, et un durcisseur,
- laisser durcir pour obtenir le matériau composite luminescent.

Dans la suite de la description, le procédé selon l'invention sera décrit en référence à l'utilisation d'éthanolamines, étant entendu que d'autres alcools aminés simples peuvent être utilisés tels que des propanolamines.

Le procédé selon l'invention permet de fabriquer un matériau composite luminescent configuré pour émettre un rayonnement lumineux (notamment) dans le domaine spectral du proche-infrarouge en réponse à une excitation à partir d'un rayonnement lumineux d'excitation dans le domaine spectral des ultraviolets.

Avantageusement, l'ajout d'un surfactant d'éthanolamine permet de favoriser la dispersion des particules semi-conductrices de (ou à base de) carbone dans le substrat polymère. Le fait de mélanger un polymère, un surfactant et des particules semi-conductrices de carbone permet au matériau composite :
- de disposer de propriétés luminescentes stables, c'est-à-dire que le matériau composite est luminescent en réponse à une excitation lumineuse dans une plus large gamme de longueurs d'onde du spectre des ultraviolets,
- d'améliorer son rendement de luminescence (ou *« rendement quantique »*)*,* notamment en émettant des rayonnements luminescents :
   ∘ dont l'intensité est plus importante à chaque longueur d'onde d'émission, et
   ∘ dans une plus large gamme de longueurs d'onde (rayonnements lumineux émis par le matériau composite dans le domaine du spectre visible et dans le domaine spectral du proche infrarouge).

On entend, dans le cadre de la présente invention par *« rayonnement dans le domaine du proche-infrarouge »,* un rayonnement électromagnétique ayant une (ou plusieurs) longueur(s) d'onde comprise(s) entre 760 nm et 850 nm.

On entend, dans le cadre de la présente invention par *« rayonnement d'excitation dans le domaine des ultraviolets »,* un rayonnement électromagnétique ayant une (ou plusieurs) longueur(s) d'onde comprise(s) entre 300 nm et 400 nm.

On entend, dans le cadre de la présente invention par *« rayonnement dans le domaine du spectre visible »,* un rayonnement électromagnétique émis à une longueur d'onde comprise entre 400 nm et 760 nm.

Des aspects préférés mais non limitatifs du procédé selon l'invention sont les suivants :
- le rapport massique surfactant/particules peut être compris entre 1 et 3, préférentiellement égal à 2 ;
- l'étape consistant à mélanger peut comprendre le mélange du surfactant, des particules et du durcisseur pour obtenir une composition homogène, puis l'ajout du polymère ;
- en variante, l'étape consistant à mélanger peut comprendre le mélange du surfactant, des particules et du polymère pour obtenir une composition homogène, puis l'ajout du durcisseur ;
- en variante encore, l'étape de mélange peut comprendre les sous-étapes suivantes :
   a) le mélange des particules semi-conductrices de carbone au surfactant pour obtenir un mélange surfactant/particules,
   b) le mélange du durcisseur avec le mélange surfactant/particules obtenu en a),
   c) le mélange du polymère avec le mélange obtenu en b).
- le polymère peut être une résine, notamment une résine époxy ;
- l'étape consistant à mélanger peut être réalisée en phase liquide ;
- le mélange obtenu en a) peut présenter une viscosité comprise entre 2 et 10 Pa.s à une température de 20°C.

L'invention concerne également un matériau composite luminescent, caractérisé en ce qu'il comprend : un polymère, un surfactant choisi parmi la famille des éthanolamines, et des particules semi-conductrices de carbone - notamment non dopées - dont les dimensions sont comprises entre 1 et 200 nanomètres, préférentiellement entre 1 et 20 nanomètres.

### BREVE DESCRIPTION DES DESSINS

D'autres avantages et caractéristiques du matériau composite luminescent et de son procédé de fabrication ressortiront mieux de la description qui va suivre de plusieurs variantes d'exécution, données à titre d'exemples non limitatifs, à partir des dessins annexés sur lesquels :
- La figure 1 est une courbe schématique illustrant la luminescence d'une résine époxy en fonction de la longueur d'onde d'un rayonnement lumineux d'excitation émis,
- La figure 2 est une courbe illustrant la luminescence d'un surfactant en fonction de la longueur d'onde d'un rayonnement lumineux d'excitation émis,
- La figure 3 est une courbe illustrant la luminescence de particules semi-conductrices de carbone contenues dans un solvant en fonction de la longueur d'onde d'un rayonnement lumineux d'excitation émis,
- La figure 4 est une courbe illustrant la luminescence d'un mélange résine époxy / surfactant en fonction de la longueur d'onde d'un rayonnement lumineux d'excitation émis,
- La figure 5 est une courbe illustrant la luminescence d'un mélange résine époxy / surfactant / particules semi-conductrices de carbone en fonction de la longueur d'onde d'un rayonnement lumineux d'excitation émis,
- La figure 6 est une représentation schématique d'un premier mode de réalisation du procédé de fabrication du matériau composite luminescent.

### DESCRIPTION DETAILLEE DE L'INVENTION

On va maintenant décrire différents exemples de réalisation de l'invention en référence aux figures. Dans ces différentes figures, les éléments équivalents sont désignés par la même référence numérique.

### 1. Luminescence

Le terme *« luminescence* » est utilisé pour caractériser les substances qui vont restituer, sous forme de photons d'origine non thermique, une partie d'une énergie absorbée au cours d'une excitation non thermique.

L'excitation de ces substances se fait par apport d'énergie qui peut prendre de nombreuses formes. Par exemple, l'excitation peut consister en l'application d'un rayonnement lumineux à des longueurs d'ondes comprises dans le domaine de l'ultraviolet, ou dans le domaine du visible ou dans le domaine de l'infrarouge (photoluminescence). L'excitation peut également consister en une réaction chimique (chimiluminescence), une réaction enzymatique (bioluminescence), une excitation électrique (électroluminescence) ou une excitation mécanique (triboluminescence).

Dans le cadre de la présente invention, le matériau composite décrit dans la suite est un matériau photoluminescent configuré :
- pour émettre un rayonnement lumineux à des longueurs d'onde comprises dans les domaines du spectre visible et du proche infrarouge,
- en réponse à l'application, sur ledit matériau composite, d'un rayonnement lumineux d'excitation à des longueurs d'onde comprises dans le domaine spectral de l'ultraviolet.

### 2. Matériau composite selon l'invention

### 2.1. Généralités

Le matériau composite selon l'invention comprend :
- un polymère, notamment une résine époxy,
- un surfactant choisi parmi la famille des éthanolamines, et
- des particules semi-conductrices de carbone dont les dimensions sont comprises entre 1 et 200 nanomètres, préférentiellement entre 1 et 20 nanomètres.

Lorsqu'ils sont considérés séparément, chacun des composés constituant le matériau composite :
- est non luminescent ; notamment, le polymère et le surfactant n'ont aucune propriété luminescente, ou
- présente des propriétés luminescentes insuffisantes pour permettre son utilisation dans une quelconque application industrielle ; notamment, les particules semi-conductrices de carbone présentent des propriétés luminescentes limitées, comme décrit plus en détail dans le paragraphe suivant.

Toutefois, les inventeurs ont découvert qu'en combinant ces différents composés, il était possible d'obtenir un matériau composite :
- à luminescence stable, c'est-à-dire que le matériau composite émet un rayonnement luminescent de forte intensité à partir d'une plus large gamme de longueurs d'onde pour le rayonnement d'excitation,
- à luminescence étendue, c'est-à-dire que le matériau composite émet des rayonnements luminescents dans une gamme de longueurs d'onde élargie couvrant à la fois le spectre visible et le spectre du proche infra-rouge.

### 2.2. Description des composés constituant le matériau composite selon l'invention

### 2.2.1. Polymère

Le polymère permet d'isoler électriquement les particules entre elles pour éviter l'échange d'énergie entre celles-ci.

De préférence, le polymère utilisé pour le matériau composite satisfait aux conditions suivantes :
- il est translucide ou transparent (dans les domaines des UV, visible, et IR),
- il est isolant électriquement.

Le polymère peut par exemple être un plastique.

En variante, le polymère peut être une résine époxy, tel qu'une résine époxy choisie parmi les résines époxy de Bisphénol A, les novolaques, les résines époxy cyclo-aliphatiques, les résines époxy hydantoïne, les résine époxy acrylates.

### 2.2.2. Surfactant

Le surfactant (ou *« tensioactif »,* également connu sous le nom de *« agent de surface »*) permet de favoriser la dispersion des particules semi-conductrices de carbone dans le polymère. En particulier, le surfactant permet de modifier la tension superficielle entre deux surfaces, et en particulier entre le polymère et les particules semi-conductrices de carbone.

Ainsi, la présence d'un surfactant permet d'augmenter l'homogénéité du matériau composite selon l'invention.

Comme indiqué précédemment, le surfactant est choisi parmi la famille des éthanolamines. Notamment, le surfactant peut être une mono-éthanolamine, une diéthanolamine, une tri-éthanolamine ou une combinaison quelconque de celles-ci.

### 2.2.3. Particules semi-conductrices de carbone

Les particules semi-conductrices de carbone sont responsables de l'émission lumineuse par le matériau composite luminescent en réponse à une excitation lumineuse.

Plus précisément, la luminescence observée pour le matériau composite luminescent est due à la recombinaison de paires électron-trou créées dans les particules semi-conductrices lors de l'excitation lumineuse à partir d'un rayonnement lumineux d'excitation émis à des longueurs d'onde comprises dans le domaine de l'ultraviolet.

De préférence, les particules semi-conductrices de carbone sont des nanoparticules. On entend, dans le cadre de la présente invention, par *« nanoparticule »* une particule dont la taille, définie telle que la plus grande dimension selon un axe, est de manière générale comprise entre 1 nm et 10 µm, préférentiellement comprise entre 5 nm et 200 nm, et encore plus préférentiellement comprise entre 10 nm et 20 nm.

Les particules semi-conductrices de carbone peuvent être choisies parmi des points quantiques de graphène ou des points quantiques de carbone. De tels points quantiques à base de carbone constituent une nouvelle classe de nanomatériaux.

Le lecteur appréciera que les particules semi-conductrices de carbone peuvent être fluorées ou non fluorées. Par exemple, les particules semi-conductrices de carbone peuvent être des nanoparticules Fluocar^{®} de type points quantiques (ou « quantum dots » selon la terminologie anglo-saxonne) de carbone fluoralkylé. De telles nanoparticules sont notamment décrites dans le document WO 2020/121119. Un avantage associé à l'utilisation de particules fluorées est que celles-ci se dispersent mieux dans un milieu hydrophobe. Ainsi, l'utilisation de particules fluorées permet d'améliorer les propriétés luminescentes du matériau composite.

### 3. Etude des propriétés luminescentes

### 3.1. Présentation

### 3.1.1. Objet de l'étude

Dans la suite, les propriétés luminescentes des différents composés (polymère, surfactant, particules) constituant le matériau composite selon l'invention seront présentées afin de démontrer que la combinaison d'un polymère, d'un surfactant, et de particules semi-conductrices de carbone constitue un mélange dont les propriétés luminescentes sont bien supérieures :
- à celles des composés pris seuls (polymère, surfactant, particules) ou
- à celle de toute combinaison dans laquelle l'un des composés est absent (polymère + surfactant, polymère + particules, surfactant + particules).

### 3.1.2. Nature du polymère, du surfactant et des particules utilisés pour l'étude

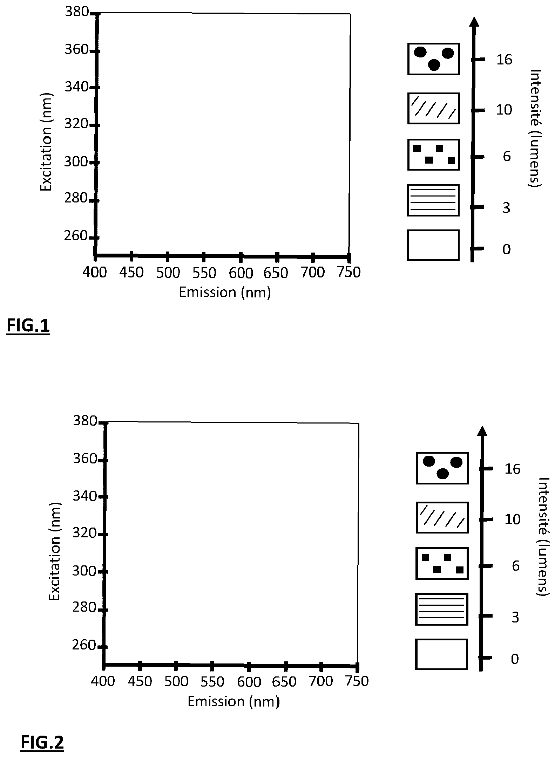

Le polymère et le surfactant utilisés dans le cadre de l'étude illustrée aux figures 1 à 6 sont respectivement une résine époxy et une mono-éthanolamine.

En ce qui concerne les particules semi-conductrices de carbone utilisées dans le cadre de l'étude illustrée aux figures 1 à 6, celles-ci sont obtenues à partir de d'urée et d'acide citrique. Ces particules, ci-après dénommées CD3011, ont été préparées par carbonisation solvothermique d'un mélange d'urée et d'acide citrique anhydre, prélevé dans un rapport molaire de 2 à 1.

La masse totale du mélange à synthétiser était de 10 g.

Après mélange, les composants ont été transférés dans un réacteur ouvert en verre Pyrex de 100 ml. Ce réacteur a été placé dans un four dont la température a été portée à 135°C pendant 15 minutes, après quoi le mélange a été maintenu à cette température pendant 1 heure. La température du réacteur a ensuite été portée à 165 °C et maintenue à cette température pendant 1 heure.

Une masse brun-noir a été obtenue. Cette masse carbonisée a été solubilisée dans 80 ml d'isopropanol à 15 % avec un léger chauffage, filtrée puis acidifiée avec 10 ml d'HCl à 36 %, tandis que les nanoparticules coagulaient et formaient un précipité.

Le précipité résultant a été filtré puis séché à l'air pour donner une poudre noire composée des particules CD3011.

### 3.1.3. Matériel utilisé pour la mesure des propriétés luminescentes

Les courbes illustrées aux figures 1 à 4 ont été obtenues en utilisant un dispositif de mesure de luminescence comprenant :
- un porte-échantillon destiné à recevoir un échantillon à analyser,
- des moyens (par exemple une source laser) pour exciter l'échantillon avec un rayonnement électromagnétique dont la longueur d'onde est réglable et peut varier entre 250 et 400 nm,
- des moyens optiques (réseau de lentilles, etc.) pour collecter et diffracter le rayonnement de luminescence émis par l'échantillon, et
- des moyens (dispositif à transfert de charges, ou *« Charge Coupled Device »* (CCD) selon la terminologie anglo-saxonne) pour mesurer l'intensité du spectre de luminescence.

Plus précisément, le dispositif de mesure utilisé était un spectrofluorimètre commercial Shimadzu RF-6000.

### 3.2. Résultats

### 3.2.1. Polymère et surfactant considérés seuls

Les figures 1 et 2 illustrent les propriétés luminescentes du polymère (figure 1) et du surfactant (figure 2) lorsqu'ils sont excités par l'application d'un rayonnement lumineux à des longueurs d'ondes variant entre 250 et 380nm.

Comme observé sur ces figures 1 et 2, ni le polymère ni le surfactant n'émet de rayonnement lumineux (que ce soit dans les domaines du spectre visible ou du proche infrarouge) en réponse à l'application d'un rayonnement lumineux d'excitation sur celui-ci.

Ainsi, le polymère seul et le surfactant seul ne présente aucune propriété de luminescence.

### 3.2.2. Particules semi-conductrices de carbone considérées seules

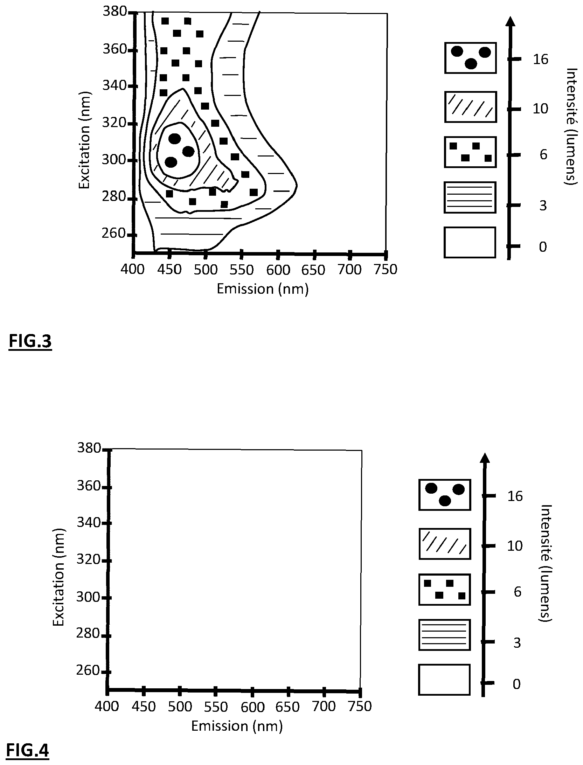

La figure 3 illustre les propriétés luminescentes des particules de CD 3011 lorsqu'elles sont mélangées dans de l'eau. En particulier, la figure 3 est une courbe illustrant la luminescence de particules de CD3011 mélangées dans de l'eau à une concentration de 0,5 gramme par litre d'eau.

Comme observé sur la figure 3, l'intensité maximale de rayonnement de luminescence est obtenue lorsque le mélange d'eau et de particules CD3011 est excité avec un rayonnement lumineux d'excitation dont la longueur d'onde est comprise entre 290 et 320 nm.

En dehors de cette plage de longueur d'onde d'excitation, l'intensité du rayonnement de luminescence décroit fortement.

Par ailleurs, on observe également sur la figure 3 que le mélange d'eau et de particules CD3011 n'émet pas de rayonnement de luminescence à des longueurs d'onde au-delà de 630nm.

### 3.2.3. Mélange polymère + surfactant

La figure 4 illustre les propriétés luminescentes d'un mélange de polymère et de surfactant excité par l'application d'un rayonnement lumineux (dont la longueur d'onde varie entre 250 et 380nm).

Ce mélange de polymère et de surfactant n'émet aucun rayonnement lumineux en réponse à l'application d'un rayonnement lumineux d'excitation sur celui-ci. Ainsi, le mélange de polymère et de surfactant ne présente aucune propriété de luminescence.

### 3.2.4. Mélange polymère + particules

Une mesure des propriétés luminescentes d'un mélange de polymère et de particules CD3011a permis de constater que le mélange de polymère et de particules luminescentes a une intensité de luminescence extrêmement faible donc insuffisante pour les applications visés.

### 3.2.5. Mélange surfactant + particules

Une étude des propriétés luminescentes d'un mélange de surfactant et de particules CD3011 a permis d'observer une forte luminescence des particules dispersé dans le surfactant.

Cependant le produit obtenu étant liquide, son utilisation pour les applications visées est fortement limitée : par exemple il est impossible de rajouter le produit liquide dans une couche encapsulant un module photovoltaïque.

### 3.2.6. Mélange polymère + surfactant + particules

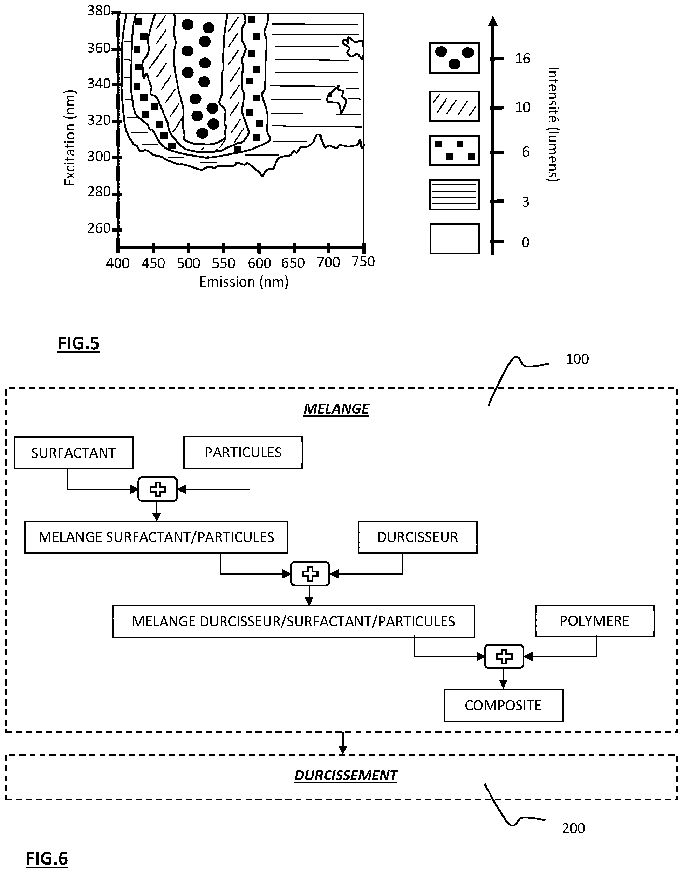

La figure 5 illustre les propriétés luminescentes du matériau composite selon l'invention qui est composé d'un mélange de polymère, de surfactant et de particules semi-conductrices de carbone.

En particulier, la figure 5 est une courbe illustrant la luminescence d'un matériau composite composé d'un mélange :
- de résine époxy (en tant que polymère),
- de mono-éthanolamine (en tant que surfactant), et
- de particules CD3011 ajoutées dans le mélange de résine polymère et de mono-éthanolamine à une concentration de 0,5 gramme par litre.

L'homme du métier observe sur cette figure 5, que l'intensité maximale de rayonnement de luminescence est obtenue lorsque le matériau composite est excité avec un rayonnement d'excitation dont la longueur d'onde est comprise entre 310 et 380 nm. En d'autres termes, la réponse luminescente du matériau composite est homogénéisée sur une gamme de longueur d'onde de rayonnement d'excitation comprise entre 300 et 400 nm.

Ainsi, le matériau composite présente une luminescence plus stable qu'un mélange d'eau et de particules CD3011. En effet, le matériau composite est apte à émettre un rayonnement luminescent d'intensité maximale en réponse à une excitation à partir de rayonnements d'excitation émis dans une plus large gamme de longueurs d'onde que le mélange d'eau et de particules CD3011.

L'homme du métier observe également sur la figure 5 que le matériau composite émet des rayonnements à des longueurs d'onde allant au-delà de 750nm. En particulier, le matériau composite émet des rayonnements de luminescence à des longueurs d'ondes comprises dans le domaine spectral du visible et dans le domaine du proche infrarouge. Ainsi, le matériau composite présente une luminescence étendue (i.e. émission de rayonnements luminescents dans une gamme de longueurs d'onde élargie).

### 3.3. Conclusions

En conclusion, le matériau composite présente des propriétés luminescentes beaucoup plus importantes :
- que les composés le constituant lorsqu'ils sont considérés seuls, ou
- que des mélanges dans lesquels l'un des composés du matériau selon l'invention est absent.

Notamment, le polymère et le surfactant n'ont aucune propriété luminescente, leur excitation par un rayonnement lumineux n'induisant l'émission d'aucun rayonnement lumineux, comme illustré aux figures 1 et 2. Par ailleurs, en ce qui concerne les particules CD 3011, lorsque celles-ci ne sont pas associées à un polymère et un surfactant, leurs propriétés luminescentes sont limitées, que ce soit en termes d'intensité ou de longueur d'onde.
∘ De plus, un mélange n'intégrant pas tous les constituants du matériau composite selon l'invention présente soit des propriétés luminescentes médiocres, soit il complexe à utiliser (voir impossible pour certaines applications).

Comme illustré à la figure 5, le matériau composite (i.e. mélange résine époxy / surfactant / particules CD3011) présente des propriétés luminescentes importantes et stables et il se retrouve sous forme solide ce qui est important pour les applications visées.

### 4. Procédé de fabrication

On va maintenant décrire un exemple de procédé de fabrication du matériau composite selon l'invention en référence à la figure 6.

Le procédé comprend une étape de mélange 100 des différents constituants du matériau composite et une étape de durcissement 200 pour former le matériau composite selon l'invention.

Différentes variantes de l'étape de mélange 100 peuvent être mises en oeuvre.

Par exemple, dans un mode de réalisation, l'étape de mélange peut consister à :
- introduire simultanément le surfactant et les particules semi-conductrices de carbone dans le polymère, à
- brasser le mélange obtenu pour l'homogénéiser, et à
- ajouter un durcisseur pour solidifier le mélange.

Toutefois, l'introduction simultanée de tous les constituants rend plus difficile la maîtrise de la concentration en particules semi-conductrices de carbone du matériau composite ainsi obtenu.

Dans un autre mode de réalisation, l'étape de mélange peut comprendre différentes sous étapes d'introduction séquentielle des constituants du matériau composite. Par exemple, dans le mode de réalisation illustré à la figure 6, l'étape de mélange comprend :
- une première sous-étape consistant à :
   ∘ introduire les particules semi-conductrices de carbone dans le surfactant afin d'obtenir un mélange intermédiaire surfactant/particules, et à
   ∘ brasser le mélange intermédiaire surfactant/particules ;
- une deuxième sous-étape consistant à :
   ∘ introduire le mélange intermédiaire surfactant/particules dans un durcisseur, et à
   ∘ brasser le mélange intermédiaire durcisseur/surfactant/particules,
- une troisième sous-étape consistant à :
   ∘ introduire le mélange intermédiaire durcisseur/surfactant/particules dans le polymère et à
   ∘ brasser le mélange polymère/durcisseur/surfactant/particules.

Le fait d'introduire séquentiellement les différents constituants du matériau composite - et en particulier de mélanger les particules semi-conductrices au surfactant préalablement à leur introduction dans le polymère - permet :
- d'une part une plus grande précision dans la maîtrise de la concentration en particules semi-conductrices de carbone, et
- d'autre part facilite l'obtention d'un matériau composite homogène.

Pour la préparation du mélange intermédiaire surfactant/particules, il est possible de mélanger une partie en poids de particules semi-conductrices de carbone avec une, deux ou trois parties en poids de surfactant. Par exemple, pour l'étude des propriété luminescentes du matériau composite décrite au point 3, une partie en poids de CD3011 avait été mélangée à deux parties en poids de mono-éthanolamine (MEA) afin d'obtenir un mélange intermédiaire surfactant/particules ayant une consistance semblable à du miel, c'est-à-dire une viscosité dynamique comprise entre 2 et 10 Pa.s à température ambiante (20°C).

Pour la préparation du mélange intermédiaire durcisseur/surfactant/particules, différents durcisseurs (ou catalyseurs) peuvent être utilisés tels que :
- une amine aliphatique, notamment :
   ∘ une éthylènediamine,
   ∘ une diéthylènetriamine,
   ∘ une triéthylènetétramine,
   ∘ une isophorone diamine ;
- une amine aromatique, notamment :
   ∘ MDA (méthylène dianiline)
   ∘ DDM (diaminodiphénylméthane),
- des durcisseurs anhydrides, notamment TGIC.

Le lecteur aura compris que de nombreuses modifications peuvent être apportées à l'invention décrite précédemment sans sortir matériellement des nouveaux enseignements et des avantages décrits ici.

Par exemple, dans certaines variantes de réalisation de l'invention, des particules métalliques peuvent être introduites lors de l'étape de mélange 100 pour obtenir un matériau composite comprenant un polymère, un surfactant, des particules semi-conductrices de carbone et des particules métalliques. Ces particules métalliques peuvent être choisies parmi le groupe consistant en l'aluminium (Al), le scandium (Sc) ou l'yttrium (Y). De tels particules métalliques jouent un rôle de filtre pour absorber une partie du spectre de luminescence non souhaité.

En variante, certains sels métalliques peuvent être ajoutés dans le mélange pour amplifier le phénomène de luminescence.

## Revendications

1. Procédé de fabrication d'un matériau composite luminescent, ***caractérisé en ce qu**'*il comprend les étapes consistant à
- mélanger (100) :
∘ un polymère,
∘ un surfactant choisi parmi la famille des alcools aminés, notamment la famille des éthanolamines,
∘ des particules semi-conductrices de carbone - notamment non dopées - dont les dimensions sont comprises entre 1 et 200 nanomètres, préférentiellement entre 1 et 20 nanomètres,
∘ un durcisseur, et
- laisser durcir (200) pour obtenir le matériau composite luminescent.

2. Procédé de fabrication selon la revendication 1, ***dans lequel*** le rapport massique surfactant/particules est compris entre 1 et 3, préférentiellement égal à 2.

3. Procédé de fabrication selon l'une quelconque des revendications 1 ou 2, ***dans lequel*** l'étape consistant à mélanger comprend le mélange du surfactant, des particules et du durcisseur pour obtenir une composition homogène, puis l'ajout du polymère.

4. Procédé de fabrication selon l'une quelconque des revendications 1 ou 2, ***dans lequel*** l'étape consistant à mélanger comprend le mélange du surfactant, des particules et du polymère pour obtenir une composition homogène, puis l'ajout du durcisseur.

5. Procédé de fabrication selon l'une quelconque des revendications 1 ou 2, ***dans lequel*** l'étape consistant à mélanger comprend les sous-étapes suivantes :
a) le mélange des particules semi-conductrices de carbone au surfactant pour obtenir un mélange surfactant/particules,
b) le mélange du durcisseur avec le mélange surfactant/particules obtenu en a),
c) le mélange du polymère avec le mélange obtenu en b).

6. Procédé de fabrication selon la revendication 1 à 5, ***dans lequel*** le polymère est une résine, notamment une résine époxy.

7. Procédé de fabrication selon l'une quelconque des revendications précédentes, ***dans lequel*** l'étape consistant à mélanger est en phase liquide.

8. Procédé de fabrication selon la revendication 5, ***dans lequel*** le mélange obtenu en a) a une viscosité comprise entre 2 et 10 Pa.s à une température de 20°C.

9. Matériau composite luminescent, ***caractérisé en ce qu**'*il comprend : un polymère, un surfactant choisi parmi la famille des éthanolamines, et des particules semi-conductrices de carbone - notamment non dopées - dont les dimensions sont comprises entre 1 et 200 nanomètres, préférentiellement entre 1 et 20 nanomètres.
